# EUROPEAN PATENT SPECIFICATION

(11) **EP 1 357 277 B1**
(45) Date of publication and mention of the grant of the patent: **19.07.2017**
(21) Application number: 02447074.2
(22) Date of filing: 26.04.2002
(51) Int. Cl.: F02B 63/04, F02G 5/00, F02G 5/02, C10L 1/02, C07C 67/02

(54) **Cogeneration process using biodiesel as fuel and supplying energy for the production of biodiesel**
Kraft-Wärme-Kupplungsprozess mit Biodiesel als Kraftstoff, das Energie zur Herstellung von Biodiesel liefert
Procédé de cogénération utilisant un combustible biodiesel et produisant de l'énergie pour la production de biodiesel

(43) Date of publication of application: 29.10.2003
(73) Proprietor: Nobeco bvba, 3530 Houthalen-Helchteren (BR)
(72) Inventor: Van Noorden, Pieter, 3530 Houthalen-Helchteren (BE)

(56) References cited:
- EP-A- 0 985 654
- DD-A- 242 396
- DE-A- 10 010 163
- DATABASE WPI Derwent Publications Ltd., London, GB; AN 1987-230513 XP002214530 & HU 42 593 A (MARTINUSZ IMRE;GYOENGYOESI ATTILA; SCHREMMER ISTVAN) 28 July 1987 (1987-07-28)
- WEYTEN, H. ET AL.: "Transesterification reaction of vegetable oil in supercritical methanol" PROCEEDINGS OF THE 8TH MEETING ON SUPERCRITICAL FLUIDS, 14 - 17 April 2002, pages 139-144, XP001105094 Bordeaux, France ISBN: 2-905267-34-8
- JACKSON M A ET AL: "METHANOLYSIS OF SEED OILS IN FLOWING SUPERCRITICAL CARBON DIOXIDE" JOURNAL OF THE AMERICAN OIL CHEMISTS' SOCIETY, AMERICAN OIL CHEMISTS' SOCIETY. CHAMPAIGN, US, vol. 73, no. 3, 1 March 1996 (1996-03-01), pages 353-356, XP000580098 ISSN: 0003-021X

## Description

### Background of the invention.

As far as the world energy supply concerns humane nature faces several problems such as decreasing mineral fuel reserves, governmental commitments with regard to on one hand reduction of carbon dioxide emissions and on the other hand a slow closing down of nuclear power plants which provide in many nations world-wide a substantial part, sometimes even the majority of the electric power. Although many efforts are made to increase the share of wind power and solar power, it seems that within the proposed time schedules a huge shortage of electric energy will threat our society.

The present invention is the key to the solution of these problems since it applies waste heat of a diesel engine for the production of biodegradable fuels besides the traditional applications of physical heating objects, fluids, vapours and gases. The described production of biodiesel which are methyl esters obtained from vegetable and animal oils and fats, is to be treated as an example of this invention.

The currently available biodiesel to be applied as fuel in automotive vehicles is produced out of virgin vegetable oils- Compared to mineral oils the production costs for vegetable oils are relatively high so far.
The invention however also allows the use of waste vegetable and animal oils and fats which increases its immediate application possibilities.

### Description of the invention.

This invention is composed of already existing components and known processes. As far as some components concern anticipation has been made because of future developments to be expected.

The "Vlaamse Instelling voor Technologisch Onderzoek" (VITO), Boerentang 200 in B-2400 Mol Belgium has developed under the leadership of Dr. H. Weyten a continuous process for producing biofuels as alternatives or additives to currently used mineral oilbased automotive or other fuels and lubricants by reacting waste and virgin oils and fats from vegetable and animal origin from now on called "raw materials". The process has been published in the article "BIODIESEL FUEL FROM VEGETABLE OIL BY TRANSESTERIFICATION IN SUPERCRITICAL METHANOL" by H. Weyten, W. Adriaansens, L. Willems & L. Van Ginneken. Supercritical means that the, in this case methanol, is brought over its critical point. For methanol this means a pressure (Pc) ≥ 80.8 bar and a temperature (Tc) of ≥ 239.4°C.

While processes as described in e.g. WO 0005327 always need a catalyst for the transesterification process, the Vito Process does not need a catalyst.

Other advantages of this process are that the reactor, in which the transesterification takes place, is relatively small which allows to apply it into small scale units and that a conversion rate > 98 % can be reached with regard to the triglycerides. One skilled in the art recognise the importance of these characteristics

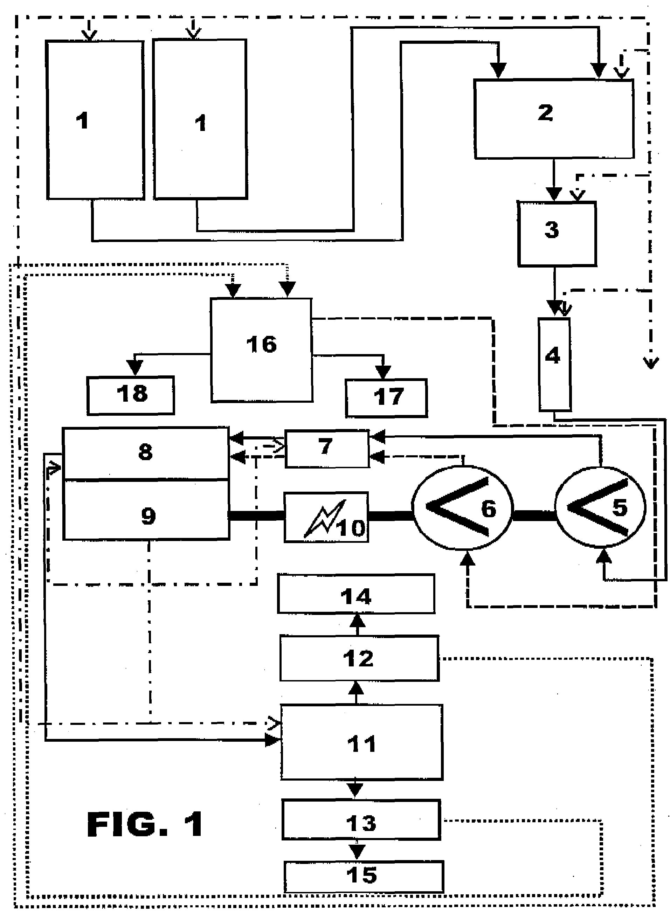

This invention relates to a process as defined in claim 1. Preferred embodiments are defined in claims 2-17. The invention is characterised by the fact that the energy necessary for the transesterification process is waste energy (dot and dash line in Fig. 1) such as engine heat and exhaust heat which gets of from the diesel engine (9) which drives a high voltage alternator (10) and possibly the high pressure pumps (5) and (6) which is known as a cogeneration process. The fuel for the diesel engine is biofuel. Due to the choice of this fuel the carbondioxide which is emitted, is neutral to the environment and therefore it does not contribute to the "greenhouse effect". This makes that the generated power is considered as so called "green energy".
In order to reduce the energy losses to a minimum, the reactor is either integrated or located close to the diesel engine.

The raw materials are stored in the tanks (1) and mixed into a raw material mixer (2). The flow of the raw materials is indicated by the full line in Fig. 1. By means of supercritical carbondioxide the viscosity of the mixed raw materials is reduced (3) in order to facilitate a filtering process (4) particular necessary in case wasted raw materials are applied. The raw material high pressure pump (5) brings the raw material mixture to the preheater (7). The energy transferred into this heater is also a part of the waste energy of the diesel engine (9). Simultaneously high pressure pump (6) brings liquid alcohol (dash line in Fig. 1) recycled from the process from the fractionating device (16) to the preheater (7). Under high pressure the raw material mixture and the alcohol are brought into the reactor where transesterification with supercritical alcohol takes place. After being transesterified, the mixture of mainly purified esters, alcohol and glycerine arrives into the distillation device (11). Into the upper phase (12) purified esters (14) remain after the alcohol has been distilled. The necessary energy for this distillation process can be obtained by the use of the waste heat from the diesel engine (9). Into the lower phase (13) remains after distillation of the alcohol, glycerine (15).

The alcohol (dotted line in Fig. 1) of the upper phase (12) as well as the heavy fractions and the alcohol of the lower phase (13) are lead to the fractionating device (16) where heavy fractions (18), water (17) and liquid alcohol are separated. The necessary cooling energy for the fractionating device can be obtained by a controlled expansion of the supercritical carbondioxide.

The cooling media of the engine are either the raw materials or the alcohol or both. In function of the optimal working temperature of the diesel engine, the cooling media are provided.

By controlling the flow of raw materials and alcohol the working temperature of the diesel engine is kept within certain temperature limits depending on the type of chosen diesel engine, which may be composed out of ceramic components.

The content of the reactor is oversized in order to obtain a transesterification rate > 90 percent even at the maximum possible flow of raw materials and alcohol. One skilled in the art will recognise that. The maximum possible flow level is determined by the type and the size of the chosen diesel engine.

Valuable alternatives to methanol are alcohol's characterised by two carbon atoms or more.

Those skilled in the art recognize, that many more chemical reactions could be started and maintained by waste heat of a diesel engine and the application of the waste heat is not limited to the above mentioned. Depending on the location where this process is installed, the waste heat also can be used for heating water for sanitary purposes, and heating factory buildings and buildings for housing.

## Claims

1. A process for generating electrical power using an engine (9) driven by a biofuel produced from a transesterification process of vegetable or animal oils and fats by means of supercritical methanol or an alcohol R-OH in which R is an alkyl group with at least 2C combined with supercritical carbondioxide in a reactor (8) which is heated by the waste heat from the engine (9) to create biofuel.

2. A process for generating electrical power referring to claim 1 in which the biofuel is a methyl ester.

3. A process for generating electrical power referring to claim 1 or 2 in which waste heat of diesel engine (9) is applied to provide thermal energy to a reactor (8) and preheater (7) to achieve transesterification of the raw material, the electrical power is supplied by alternator (10), the raw materials and supercritical alcohol are transferred to the preheater (7) by high pressure pumps (5, 6), besides, the raw materials are flowing from reservoirs (1) via the pre treatment device (2, 3, 4) to the high pressure pumps (5, 6) and from the reactor (8) to a distillation device (11) and eventually to the fractionating device (16) where they have become end-products.

4. A process for generating electrical power referring to the preceding claims in which a diesel engine (9) for driving an alternator (10) is driven by a biofuel, prepared by transesterification of raw materials vegetable and animal oils and fats and supercritical alcohol.

5. A process for generating electrical power referring to the preceding claims in which the engine (9) is composed of ceramic parts.

6. A process for generating electrical power referring to claim 5 in which the raw materials consist of waste vegetable and animal oils and fats.

7. A process for generating electrical power referring to claims 4 or 6 in which the raw materials from the reservoirs (1) are mixed (2) and filtered (4) and the viscosity is decreased by using supercritical CO₂,

8. A process for generating electrical power referring to claims 1 or 3 in which a reactor (8) for the transesterification of the raw materials and supercritical alcohol is **characterised by** the location of the reactor (8) as close as technically possible to the engine (9) or integrated in the engine (9).

9. A process for generating electrical power referring to claims 4 or 8 in which the temperature and heat transfer of the engine (9) is regulated by a mixture of raw materials and supercritical alcohol.

10. A process for generating electrical power referring to claim 3 **characterised by** the application of the waste heat of engine (9) as an energy source for a preheater (7) to which the raw materials and alcohol, derived from the fractionating device (16) are transferred by respectively the high pressure pumps (5) and (6).

11. A process for generating electrical power referring to the previous claim in which the high pressure pumps (5, 6) are driven by the engine (9).

12. A process for generating electrical power referring to claim 3 in which a fractionating device (16) separates the recycled alcohol from a distillation device (11).

13. A process for generating electrical power referring to claim 12 **characterised by** the alcohol, R-OH from the fractionating in which R is an alkyl group with at least 2C.

14. A process for generating electrical power referring to the claims 12 or 13 in which the fractionating device (16) is controlled by supercritical CO₂.

15. A process for generating electrical power referring to the previous claims characterised that the energy necessary for meeting the physical conditions to obtain supercritical CO₂ for controlling the viscosity of the mixed, raw materials is supplied by the engine (9).

16. A process for generating electrical power referring tc claim 3 or 12, in which the distillation device (11) separates esters, alcohol and glycerine from the transesterification process.

17. A process for generating electrical power referring to claim 16 in which the energy for the distillation is recovered from the engine (9) -

## Patentansprüche

1. Verfahren zur Erzeugung von elektrischer Energie durch einen Motor (9) von einem Biokraftstoff angetrieben, hergestellt über einem Umesterungsverfahren von pflanzlichen oder tierischen Öle und Fetten mit überkritische Methanol oder einem Alkohol R-OH, wobei R eine Alkylgruppe mit mindestens 2C ist, kombiniert mit überkritischen Kohlendioxid in einem Reaktor (8), der mit der Abwärme des Motors (9) beheizt wird, um Biokraftstoff zu erzeugen.

2. Verfahren zur Erzeugung von elektrischer Energie nach Anspruch 1 **dadurch gekennzeichnet dass** der Biokraftstoff ein Methylester ist.

3. verfahren zur Erzeugung von elektrischer Energie nach Anspruch 1 oder 2 **dadurch gekennzeichnet dass** die Abwärme des Dieselmotors (9) eingesetzt wird um einem Reaktor (8), einem Vorwärmer (7) zu beheizen, damit die Umesterung der Rohstoffe statt finden kann, die elektrische Energie von einer Lichtmaschine (10) erzeugt wird, die Rohstoffe und überkritische Alkohol von den Hochdruckpumpen (5, 6) zu den Vorwärmer (7) geführt und ebenso die Rohstoffe von der Vorratsbehälter (1) durch die Hochdruckpumpen (5,6) über eine Vorbehandlungsvorrichtung (2,3,4) und vom Reaktor (8) zur der Destillationsvorrichtung (11) fließen bis letztendlich zum Fraktioniervorrichtung (16) wo sie Endprodukt geworden sind.

4. Verfahren zur Erzeugung von elektrischer Energie nach den vorgehenden Ansprüche **dadurch gekennzeichnet dass** der Kraftstoff für den Dieselmotor (9), der die Richtmaschine (10) antreibt, Biokraftstoff ist, hergestellt durch Umeseterung von Rohstoffe : pflanzliche und tierische Öle und Fetten und überkritischer Alkohol.

5. Verfahren zur Erzeugung von elektrischer Energie nach den vorhergehenden Ansprüche **dadurch gekennzeichnet dass** der Motor (9) aus Keramikteile zusammengestellt ist.

6. Verfahren zur Erzeugung von elektrischer Energie nach Anspruch 5 **dadurch gekennzeichnet dass** die Rohstoffe aus Abfälle pflanzlicher und tierischer Ölen und Fetten bestehen.

7. Verfahren zur Erzeugung von elektrischer Energie nach Anspruch 4 oder 6 **dadurch gekennzeichnet dass** die Rohstoffe aus dem Vorratsbehältern (1) gemischt (2) und gefiltert (4) werden und die Viskosität unter Verwendung von überkritischen CO₂ verringert wird.

8. Verfahren zur Erzeugung von elektrischer Energie nach Anspruch 1 oder 3 **gekennzeichnet durch** den Reaktor (8) für die Umesterung der Rohstoffe und überkritischen Alkohol und durch die Lage des Reaktors (8) so nah als technisch möglich zu dem Motor (9), oder in dem Motor (9) integriert.

9. Verfahren zur Erzeugung von elektrischer Energie nach Anspruch 4 oder 8 **dadurch gekennzeichnet dass** die Temperatur und die Wärmeübertragung des Motors (9) durch eine Mischung aus Rohstoffe und überkritischem Alkohol reguliert wird.

10. Verfahren zur Erzeugung von elektrischer Energie nach Anspruch 3 **dadurch gekennzeichnet dass** die Abwärme des Motors (9) als Energiequelle der Vorwärmer (7), wohin die Rohstoffe und Alkohol aus der Fraktioniervorrichtung (16) geführt werden durch die Hochdruckpumpen (5) und (6), dient.

11. Verfahren zur Erzeugung von elektrischer Energie nach vorhergehenden Ansprüche **dadurch gekennzeichnet dass** die Hochdruckpumpen (5) und (6) von dem Motor (9) angetrieben werden.

12. Verfahren zur Erzeugung von elektrischer Energie nach Anspruch 3 **dadurch gekennzeichnet dass** eine Fraktioniervorrichtung (16) den recycleten Alkohol von einer Destillationsevorrichtung (11) trennt.

13. Verfahren zur Erzeugung von elektrischer Energie nach Anspruch 12 **dadurch gekennzeichnet dass** der Alkohol R-OH aus der Fraktionierkolonne, R eine Alkylgruppe mit mindestens 2C ist.

14. Verfahren zur Erzeugung von elektrischer Energie nach Anspruch 12 oder 13 **dadurch gekennzeichnet dass** die Fraktiniervorrichtung (16) mit überkritischen CO₂ gesteuert wird.

15. Verfahren zur Erzeugung von elektrischer Energie nach den vorgehenden Ansprüche **dadurch gekennzeichnet dass** die Energie, notwendig für die Erfüllung der physikalischen Bedingungen zu überkritischem CO₂ für die Kontrolle der Viskosität der gemischten Rohstoffe durch den Motor (9) geliefert wird.

16. Verfahren zur Erzeugung von elektrischer Energie nach Anspruch 3 oder 12 **dadurch gekennzeichnet dass** die Destillationsvorrichtung (11) Ester, Alkohol und Glycerin aus dem Umesterungsverfahren trennt.

17. Verfahren zur Erzeugung von elektrischer Energie nach Anspruch 16 **dadurch gekennzeichnet dass** die Energie für die Destillation von dem Motor (9) zurück gewonnen wird.

## Revendications

1. Procédé pour produire de l'énergie électrique à l'aide d'un moteur (9) entraîné par un biocarburant, produit à partir d'un procédé de transestérification des huiles et graisses végétales ou animales en utilisant méthanol supercritique ou un alcool R-OH duquel R est un groupe alkyle avec au moins 2C, combiné avec du dioxyde de carbone supercritique dans un réacteur (8) chauffé par la chaleur récupéré du moteur (9), pour produire biocarburant.

2. Procédé pour produire de l'énergie électrique se référant à la revendication 1 dans lequel le biocarburant est un ester méthylique.

3. Procédé pour produire de l'énergie électrique se référant à la revendication 1 ou 2 dans lequel la chaleur perdue du moteur diesel (9) est utilisée pour alimenter de l'énergie thermique à un réacteur (8) et un dispositif de préchauffage (7) pour obtenir un transestérification de la matière première, la puissance électrique est générée par un alternateur (10), des matières premières et de l'alcool supercritique sont transférées à un dispositif de préchauffage (7) par des pompes à haut pression (5,6), en plus des matières premières coulent des réservoirs (1) par un dispositif de prétraitement (2,3,4) aux pompes à haute pression (5, 6) et du réacteur (8) à un dispositif de distillation (11) et finalement au dispositif de fractionnement (16) dans lesquels ils ont devenu des produits finals.

4. Procédé pour produire de l'énergie électrique se référant aux revendications précédentes dans lequel un moteur diesel (9) destiné à entraîner un alternateur (10), est entraîné par un biocarburant, préparé par transestérification des matières premières : des huiles et graisses végétales et animales et de l'alcool supercritique.

5. Procédé pour produire de l'énergie électrique se référant aux revendications précédentes dans lequel le moteur (9) se compose des pièces en céramique.

6. Procédé pour produire de l'énergie électrique se référant à la revendication 5 dans lequel des matières premières se composent des déchets des huiles et graisses végétales et animales.

7. Procédé pour produire de l'énergie électrique se référant à la revendication 4 ou 6 dans lequel les matières premières provenant des réservoirs (1) sont mélangées (2) et filtrées et la viscosité est réduite en utilisant du CO₂ supercritique.

8. Procédé pour produire de l'énergie électrique se référant à la revendication 1 ou 3 dans lequel un réacteur (8) pour la transestérification des matières premières et de l'alcool supercritique, **caractérisé par** l'emplacement du réacteur (8) aussi proche que techniquement possible au moteur (9) ou intégré dans le moteur (9).

9. Procédé pour produire de l'énergie électrique se référant à la revendication 4 ou 8 dans lequel la température et le transfert du chaleur du moteur (9) est régulée par un mélange des matières premières et de l'alcool supercritique.

10. Procédé pour produire de l'énergie électrique se référant à la revendication 3 **caractérisé par** l'application de la chaleur perdue du moteur (9) comme source d'énergie pour un dispositif de préchauffage (7) à lequel des matières premières et l'alcool, dérive du dispositif de fractionnement (15), sont transféré par respectivement les pompes à haut pression (5) et (6).

11. Procédé pour produire de l'énergie électrique se référant aux revendications précédentes dans lequel les pompes à haut pression (5, 6) sont entraînés par le moteur (9).

12. Procédé pour produire de l'énergie électrique se référant à la revendication 3 dans lequel un dispositif de fractionnement (16) sépare l'alcool recyclé d'un dispositif de distillation (11).

13. Procédé pour produire de l'énergie électrique se référant à la revendication 12 **caractérisé en ce que** l'alcool R-OH du fractionnement duquel R est un groupe alkyl avec au moins 2C.

14. Procédé pour produire de l'énergie électrique se référant à la revendication 12 ou 13 dans lequel le dispositif de fractionnement (16) est commandé par le CO₂ supercritique.

15. Procédé pour produire de l'énergie électrique se référant aux revendications précédentes caractérisé que l'énergie nécessaire pour satisfaire les conditions physique pour devenir le CO₂ supercritique, pour contrôler la viscosité des matières premières mélangées est fournie par le moteur (9).

16. Procédé pour produire de l'énergie électrique se référant à la revendication 3 ou 12 dans lequel le dispositif de distillation (11) sépare des esters, d'alcool et de glycérine du processus du transestérification.

17. Procédé pour produire de l'énergie électrique se référant à la revendication 16 dans lequel l'énergie pour la distillation est récupéré du moteur (9).
